Europäisches Patentamt

European Patent Office

Office européen des brevets

(19)

(11) Veröffentlichungsnummer: **0 126 996**
**B1**

# EUROPÄISCHE PATENTSCHRIFT

(12)

(45) Veröffentlichungstag der Patentschrift:
23.11.88

(21) Anmeldenummer: 84104812.7

(22) Anmeldetag: 28.04.84

(51) Int. Cl.⁴: **B 01 F 15/04,** A 23 B 7/148

(54) **Verfahren zum Erzeugen einer Inertgasatmosphäre konstanter Zusammensetzung aus Stickstoff und Kohlendioxid in einem Kühlcontainer.**

(30) Priorität: 27.05.83 DE 3319249

(43) Veröffentlichungstag der Anmeldung:
05.12.84 Patentblatt 84/49

(45) Bekanntmachung des Hinweises auf die Patenterteilung:
23.11.88 Patentblatt 88/47

(84) Benannte Vertragsstaaten:
AT BE FR GB IT NL SE

(56) Entgegenhaltungen:
DE-A-1 902 685
GB-A-2 103 498
US-A-3 563 757
US-A-3 830 256

(73) Patentinhaber: MESSER GRIESHEIM GMBH,
Hanauer Landstrasse 330, D-6000 Frankfurt/Main 1
(DE)

(72) Erfinder: Glastra, Hendrik, Berkinkweg 65,
Enschede (NL)
Erfinder: Volker, Wolfgang, Pastorsbusch 35,
D-4154 Tönisvorst 1 (DE)

EP 0 126 996 B1

**Beschreibung**

Die Erfindung betrifft ein Verfahren zum Erzeugen einer Inertgasatmosphäre konstanter Zusammensetzung aus Stickstoff und Kohlendioxid in einem Kühlcontainer, der mit einem Dieselaggregat und einer Kältemaschine ausgerüstet ist und in welchem ein geringer Sauerstoffgehalt mittels einer Sauerstoff-Grenzwertregelung aufrechterhalten wird.

Aus vielen wissenschaftlichen Untersuchungen ist es bekannt, das landwirtschaftliche Erzeugnisse pflanzlicher und tierischer Herkunft, Blumen und Pflanzen, in gekühlten Räumen viel länger in frischem Zustand aufbewahrt werden können, wenn die natürliche Atmosphäre durch eine Inertgasatmosphäre aus Stickstoff und Kohlendioxid ersetzt wird. In den meisten Fällen ist auch ein geringer Sauerstoffgehalt von Vorteil. Die für die einzelnen Produkte optimalen Zusammensetzungen des Gasgemisches sind unterschiedlich, generell läßt sich jedoch sagen, daß die Gehalte an Kohlendioxid und Sauerstoff gering sind und jeweils höchstens 10 Vol.-% betragen. Lediglich bei Frischfleischtransporten kann es zweckmäßig sein, den Kohlendioxidgehalt bis zu 15 Vol.-% anzuheben.

In großen, ortsfesten Lagerraumen lassen sich derartige Inertgasatmosphären verhältnismäßig leicht herstellen und aufrechterhalten, da hierzu geschultes Personal zur Verfügung steht. Es ist jedoch wünschenswert, daß auch in Kühlcontainern für den Transport derartiger landwirtschaftlicher Erzeugnisse entsprechende Inertgasatmosphären aufrechterhalten werden können. An entsprechenden Versuchen hat es auch nicht gefehlt. So zeigt beispielsweise die US-A-3 269 133 einen Kühlcontainer, an dem außen ein Speicher für flüssigen Stickstoff und eine Gasflasche für Kohlendioxid befestigt sind. Von diesen Behältern führen Leitungen in das Containerinnere. Der Sauerstoffgehalt in der Atmosphäre wird durch ein Sauerstoff-Meßgerät ermittelt. Wenn der Sauerstoffgehalt infolge durch Leckstellen eindringender Luft zu groß wird, wird von dem Sauerstoff-Meßgerät ein Steuerimpuls zur Zufuhr von gasformigem Stickstoff aus dem Speicher für flüssigen Stickstoff gegeben. Die Stickstoffzufuhr wird beendet, sobald der eingestellte Sauerstoffbereich wieder erreicht worden ist. Unabhängig davon wird durch ein Kohlendioxid-Meßgerät der Gehalt an Kohlendioxid überwacht. Sinkt der Kohlendioxidgehalt unter den vorgegebenen Wert, wird durch Steuerimpulse die Zufuhr von Kohlendioxid aus der Gasflasche solange freigegeben, bis der vorgegebene Gehalt an Kohlendioxid wieder erreicht ist. Es sind auch Kühlcontainer zum Einsatz gelangt, bei denen die Behälter für Stickstoff und Kohlendioxid in besonderen Abteilen, ähnlich wie die Kühlmaschine, das Dieselaggregat und der Kraftstoffvorratsbehälter, im Innern des Containers angeordnet sind. Die genormten Außenabmessungen des Containers können bei derartigen Anordnungen beibehalten werden, was vor allem für den Transport von großem Vorteil ist. Als nachteilig hat sich jedoch Messung und Steuerung des Kohlendioxidgehalts herausgestellt. Während es für die Messung und Steuerung des Sauerstoffgehaltes eine ganze Reihe bewährter und robuster Geräte gibt, sind die entsprechenden Geräte für Kohlendioxid kompliziert und störanfällig. Während man bei stationären Anlagen dies in Kauf nehmen kann, weil entsprechend geschultes Personal bereitgestellt werden kann, ist dies bei Kühlcontainern nicht der Fall. Sie sind im Verkehr einem rauhen Betrieb ausgesetzt und werden von einer Vielzahl von Hilfskräften unterschiedlichster Qualifikation bedient. Kühlcontainer mit geregelter Inertgasatmosphäre haben sich aus diesem Grunde bisher in der Praxis nicht durchsetzen können.

Der Erfindung liegt daher die Aufgabe zugrunde, ein Verfahren zum Erzeugen einer Inertgasatmosphäre konstanter Zusammensetzung aus Stickstoff, Kohlendioxid und geringen Mengen Sauerstoff in Kühlcontainern zu schaffen, bei dem sich eine Messung und Steuerung des Kohlendioxidgehalts erübrigt und die gesamte Herstellung des Gasgemisches aus Kohlendioxid, Stickstoff und Sauerstoff durch ein Sauerstoff-Meßgerät geführt werden kann.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Das erfindungsgemäße Verfahren ermöglicht es, die Inertgasatmosphäre im Kühlcontainer nur mit einem Sauerstoff-Meßgerät zu führen. Es erübrigt sich, jegliche separate Messung und Regelung des Kohlendioxidgehalts, weil bei der Zufuhr der Inertgase immer ein zuvor festgelegtes, konstantes Verhältnis von Stickstoff und Kohlendioxid in den Kühlcontainer geleitet wird. Dies wird zum einem erreicht durch die mit einem elektrischen Verdampfer im Speicher für den flüssigen Stickstoff bewirkte Erzeugung des gasförmigen Stickstoffs. Bei konstanter Aufnahme elektrischer Energie durch den Verdampfer wird auch eine konstante Stickstoffmenge verdampft. Zum anderen wird dies erreicht, indem das Kohlendioxid auf eine vorgegebene Temperatur erwärmt und einen konstanten Druck entspannt wird. Dies wird mit einem üblichen Gaserwärmer und mit einem Druckminderer erreicht. Das weitere Ausströmen des Kohlendioxids durch die Drosselstellen erfolgt gegen den atmosphärischen Druck im Container. Da der Druck vor und hinter den Drosselstellen konstant ist, ergibt sich ein konstanter Fluß gasförmigen Kohlendioxids durch die Drosselstellen. Das Mischungsverhältnis zwischen Kohlendioxid und Stickstoff wird somit ausschließlich durch die Anzahl der zugeschalteten Drosselstellen, vorzugsweise Meßblenden, bestimmt. Dies kann mit einem einfachen Serienschalter erfolgen. Auf den Druckknöpfen des Serienschalters können die jeweils zugemischten prozentualen Kohlendioxidmengen angegeben werden. Es können jedoch auch die Produkte angegeben werden, für welche die Knöpfe jeweils betätigt werden müssen. Im Routinebetrieb reduziert sich somit der Bedienungsaufwand auf das Einstellen des gewünschten Sauerstoffgehaltes am Sauerstoff-Meßgerät, auf das Betätigen eines Schalters für eine vorgegebene Kohlendioxidzumischung und auf das Einstellen der Kühlraumtemperatur.

Der Speicher für den flüssigen Stickstoff wird vorzugsweise drucklos betrieben. Dadurch werden die internationelen Vorschriften für derartige Behälter leichter erfüllt. Vorzugsweise werden die Speicher aufrechtstehend und nicht liegend angeordnet, weil dadurch der konstruktive Aufwand und folglich das Gewicht verringert werden kann. Ob einer oder mehrere Speicher vorgesehen werden, hängt von den jeweiligen Gegebenheiten ab. Einerseits muß angestrebt werden, daß die Einrichtung zur Inertgasversorgung so wenig Platz wie möglich im Container einnimmt. Andererseits muß die Kapazität für eine genügend lang andauernde Inertgasversorgung groß genug sein. Sie sollte mindestens einen Monat betragen. Die gesamte Einrichtung zur Inertgasversorgung wird vorzugsweise in einem separaten Abteil des Containers untergebracht. Falls dies der Fall ist, muß nicht nur der eigentliche Laderaum, sondern auch das Abteil für die Inertgasversorgung eine Entlüftungsöffnung besitzen, damit sich kein unzulässig hoher Druck aufbauen kann. Durch die Entlüftungsöffnung des Laderaumes entweicht bei Inertgaszufuhr das überschüssige Gas mit zu hohem Sauerstoffgehalt.

Für einen sparsamen Betrieb ist es erforderlich, daß der Container gut isoliert ist und möglichst wenig Leckstellen besitz, durch welche Außenluft in das Containerinnere eintreten kann. Die Menge der durch solche Leckstellen eintretenden Außenluft bestimmt maßgeblich den Inertgas Verbraucht, da durch das Eindringen von Außenluft der Sauerstoffgehalt solange erhöht wird, bis er den eingestellten Grenzwert überschreitet und die Inertgaszufuhr einsetzt.

Ein Ausführungsbeispiel der Erfindung soll anhand der beigefügten Zeichnungen erläutert werden.

Es zeigen

Fig. 1    eine aufgebrochene Draufsicht auf einen Container mit Inertgasversorgung;

Fig. 2    eine Schaltungsanordnung für die Inertgasversorgung.

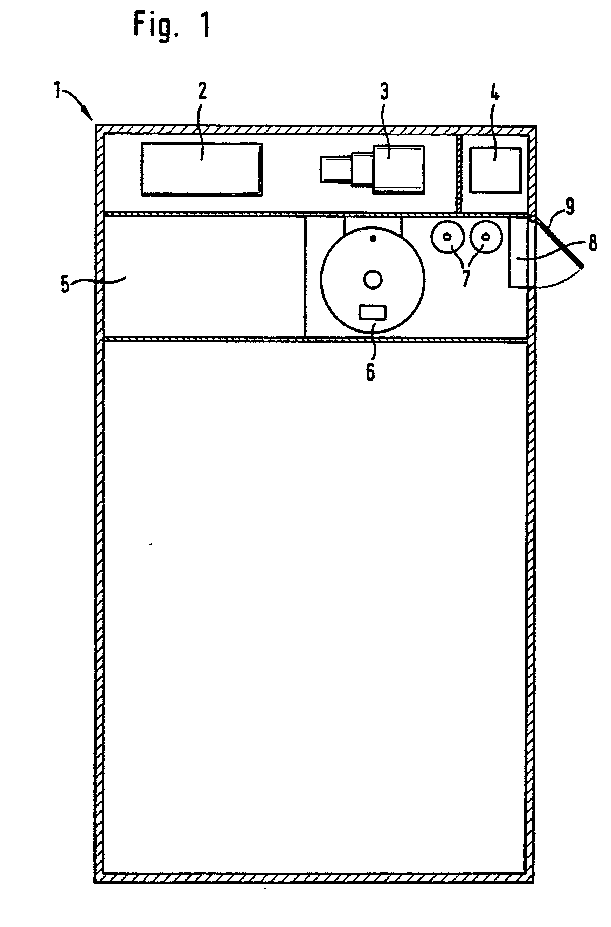

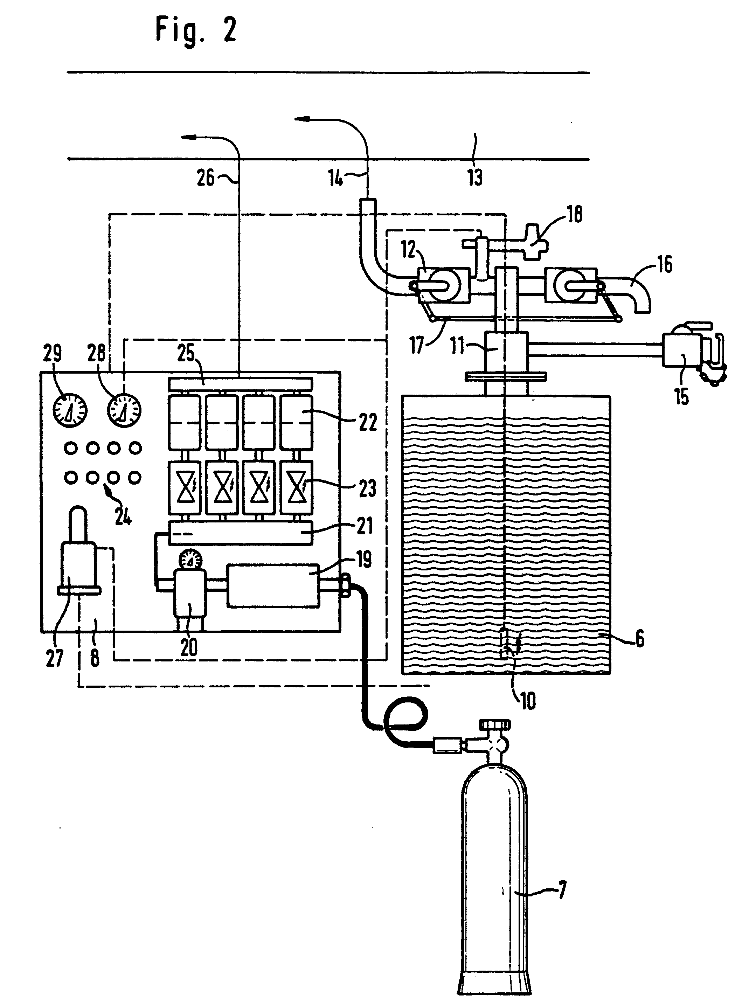

Der in Fig. 1 aufgebrochen dargestellte Container 1 weist ein separates Abteil auf, in dem einerseits eine Kältemaschine 2, ein Dieselaggregat 3 zur Stromerzeugung und ein Sauerstoff-Meßgerät 4 zur Sauerstoffregelung angeordnet sind, andererseits ein Tank 5 für Dieselöl, ein Speicher 6 für flüssigen Stickstoff, Gasflaschen 7 für Kohlendioxid und ein Schaltschrank 8 installiert sind. Der Schaltschrank 8 enthält sämtliche Kontroll- und Schalteinrichtungen, wie die Kontrolle des Füllstandes des Speichers 6, des Drucks der Gasflaschen 7, den Hauptschalter, die Betätigungsschalter für Absperrorgane und Sicherheitsventile, sowie die Betätigungsschalter für die Herstellung des Inertgasgemisches aus Kohlendioxid und Stickstoff gemäß der Erfindung. Nach dem Öffnen der Tür 9 ist das Abteil zugänglich, so daß die Gasflaschen 7 bei Bedarf ausgetauscht werden können. Fig. 2 zeigt eine Schaltungsanordnung zum Herstellen der Inertgasatmosphäre konstanter Zusammensetzung aus Stickstoff und Kohlendioxid gemäß der Erfindung. Elektrische Verbindungen sind darin als gestrichelte Linien eingezeichnet und nicht näher bezeichnet. Im Speicher 6 für flüssigen Stickstoff befindet sich erfindungsgemäß ein elektrischer Verdampfer 10, der an den Generator des Dieselaggregats angeschlossen ist. Bei Beheizung erzeugt der Verdampfer 10 eine konstante Menge an kaltem gasförmigen Stickstoff, nämlich 22 $Nm^3/h$. Der verdampfte Stickstoff 14 gelangt durch den Tankkopf 11 und den Kugelhahn 12 in den Umluftstrom 13 der Kältemaschine. Sein Kälteinhalt wird somit noch zur Kühlung des Laderaumes des Containers ausgenützt. Am Tankkopf 11 ist ferner der Tankstutzen 15 und der Überlaufhahn 16 angebracht. Der Überlaufhahn 16 wird beim Füllen des Speichers 6 geöffnet und der Kugelhahn 12 geschlossen. Bei Inertgasbetrieb im Kühlcontainer 1 ist es genau umgekehrt. Um das gleichzeitige Betätigen des Kugelhahns 12 und des Überlaufhahns 16 sicherzustellen, werden beide Hähne durch eine Parallelverstellung 17 betätigt. In der Entnahmeleitung dem Tankkopfes 11 befindet sich ein Sicherheitsventil 18. Der flüssige Stickstoff im Speicher 6 steht unter atmosphärischem Druck.

Kohlendioxid aus der Gasflasche 7 wird im Nacherwärmer 19 erwärmt und im Druckminderer 20 auf einen Druck von 2,5 bar entspannt. Danach gelangt es in den Verteiler 21. Gemäß der Erfindung sind an den Verteiler vier parallelgeschaltete Meßblenden 22 angeschlossen, die mit Hilfe von Magnetventilen 23 zu- oder abgeschaltet werden können. Dies geschieht mit dem Serienschalter 24. Das Kohlendioxid 26 gelangt anschließend in die Sammelleiste 25 und ebenfalls in den Umluftstrom 13 der Kältemaschine 2. Da das Kohlendioxid von dem konstanten Druck hinter dem Druckminderer 20 auf den atmosphärischen Druck im Kühlcontainer 1 entspannt wird, ist der Gasfluß allein abhängig vom Öffnungsquerschnitt der Meßblenden 22. Die vier Meßblenden 22 sind so dimensioniert, daß sich Kohlendioxidströme von 0,2, 0,45, 0,9 oder 2,0 Nm³/h ergeben, jeweils bei einem gleichzeitigen Stickstoffstrom von 22 Nm³/h. Die Meßblenden können beliebig miteinander kombiniert werden, so daß sich alle wichtigen Kohlendioxidgehalte im Stickstoff darstellen lassen. Im Extremfall wird überhaupt keine Meßblende 22 geöffnet, so daß eine reine Stickstoff-Sauerstoff-Inertgasatmosphäre im Kühlcontainer 1 aufrechterhalten wird.

Weitere wichtige Instrumente im Schaltschrank 8 sind die Füllstandsanzeige 27 zur Anzeige des Gehalts an flüssigem Stickstoff im Speicher 6 und das Manometer 28 zur Anzeige eines eventuellen Überdrucks im Speicher 6.

Der Kohlendioxiddruck in der Gasflasche 7 wird durch ein Manometer 29 angezeigt.

Die Kombination aus Kugelhahn 12, Überlaufhahn 16 und Parallelverstellung 17 kann auch durch einen Dreiwegehahn ersetzt werden. Es können auch getrennte Kugelhane verwendet werden, wenn ein Kugelhahn durch einen Mikroschalter überwacht wird. Das Sicherheitsventil 18 ist auf einen Abblasedruck von 0,3 bar eingestellt. Es hat nur die Funktion einer Gassicherung. Bei normalem Inertgasbetrieb wird es nicht benötigt. Ferner sind Sicherungen vorgesehen, aber in der Zeichnung nicht dargestellt, die die Heizung des elektrischen Verdampfers abschalten, wenn der Gehalt an flüssigem Stickstoff im Speicher 6 zu gering ist.

Stickstoff und Kohlendioxid werden immer gleichzeitig und immer in einem konstanten Verhältnis und in konstanter Menge in den Umluftstrom 13 eingeleitet. Die Steuerimpulse hierfür liefert das Sauerstoffmeßgerät 4. Da die Sauerstoffgehalte in der Regel sehr gering sind, können die Endkonzentrationen der einzelnen Komponenten sehr exakt erreicht werden.

Die Inertgasbedingungen lassen sich überaus einfach einstellen, auch von ungeschultem Personal. Es sind keine empfindlichen Systeme zur Gasdosierung vorhanden. Der Aufbau der Anlage ist robust und ermöglicht lange Wartungsintervalle. Die Schaltungsanordnung enthält nur standardisierte Ersatzzeile, die weltweit im Falle einer Reparatur leicht beschafft werden können. Die Voraussetzungen für einen optimalen Containerbetrieb sind damit gegeben.

## Patentansprüche

1. Verfahren zum Erzeugen einer Inertgasatmosphäre konstanter Zusammensetzung aus Stickstoff und Kohlendioxid in einem Kühlcontainer (1), der mit einem Dieselaggregat (3) und einer Kältemaschine (2) ausgerüstet ist und in welchem ein geringer Sauerstoffgehalt mittels einer Sauerstoff-Grenzwertregelung (4) aufrechterhalten wird, während der Stickstoff aus mindestens einem mit dem Kühlcontainer verbundenen Speicher (6) für flüssigen Stickstoff und das Kohlendioxid aus mindestens einer mit dem Kühlcontainer verbundenen Gasflasche (7) bei Überschreiten des vorgegebenen Sauerstoff-Grenzwertes in das Innere des Kühlcontainers geleitet wird,
dadurch gekennzeichnet,
daß während der Dauer des Einleitens der Inertgase ein konstanter Strom kalten, gasförmigen Stickstoffs mittels eines im Speicher für flüssigen Stickstoff angeordneten, an den Generator des Dieselaggregats angeschlossenen elektrischen Verdampfers (10) erzeugt und in den Kühlcontainer geleitet wird, während aus der Gasflasche Kohlendioxid entnommen, erwärmt, auf einen konstanten Druck entspannt und durch eine oder mehrere einer Gruppe parallel geschalteter, einzeln zuschaltbarer Drosselstellen in den Kühlcontainer geleitet wird.

2. Verfahren nach Anspruch 1, dadurch gekennzeichnet, daß das Kohlendioxid über Meßblenden (22) in den Kühlcontainer geleitet wird.

3. Verfahren nach Anspruch 1 oder 2, dadurch gekennzeichnet, daß der Strom kalten, gasförmigen Stickstoffs in den Umluftstrom (13) der Kältemaschine eingespeist wird.

4. Verfahren nach einem der Ansprüche 1 bis 3, dadurch gekennzeichnet, daß der Strom kalten, gasförmigen Stickstoffs aus einem drucklos betriebenen Speicher entnommen wird.

5. Verfahren nach einem der Ansprüche 1 bis 4, dadurch gekennzeichnet, daß die Komponenten der Inertgasatmosphäre aus im Kühlcontainer befindlichen Speichern und Gasflaschen entnommen werden.

## Claims

1. Process for generating an inert gas atmosphere of constant composition from nitrogen and carbon dioxide in a refrigerated container (1) which is equipped with a diesel set (3) and a refrigerating machine (2) and in which a low oxygen content is maintained by means of an oxygen limit control (4), whereas the nitrogen is passed from at least one liquid nitrogen store (6) connected to the refrigerated container and the carbon dioxide is passed from at least one gas cylinder (7) connected to the refrigerated container into the interior of the refrigerated container when the predetermined oxygen limit is exceeded, characterized in that, during the time while the inert gases are passed in, a constant stream of cold gaseous nitrogen is generated by means of an electric vaporizer (10) located in the liquid nitrogen store and connected to the generator of the diesel set and is passed into the refrigerated container, while carbon dioxide is taken from the gas cylinder, heated, let down to a constant pressure and passed into the refrigerated container through one or more restriction points which are arranged in parallel as a group and can be connected individually.

2. Process according to claim 1, characterized in that the carbon dioxide is passed into the refrigerated container via orifice plates (22).

3. Process according to claim 1 or 2, characterized in that the stream of cold gaseous nitrogen is fed into the circulating-air stream (13) of the refrigerating machine.

4. Process according to one of claims 1 to 3, characterized in that the stream of cold gaseous nitrogen is taken from a store operated without pressure.

5. Process according to one of claims 1 to 4, characterized in that the components of the inert gas atmosphere are taken from stores and gas cylinders located in the refrigerated container.

**Revendications**

1. Procédé pour produire une atmosphère de gaz inerte de composition constante comprenant de l'azote et du dioxyde de carbone dans un conteneur frigorifique (1) équipé d'un groupe électrogène à moteur Diesel (3) et d'une machine frigorifique (2), en maintenant une faible teneur en oxygène à l'aide d'une régulation à valeur limite d'oxygène (4) et l'azote est fourni à partir d'un réservoir (6) d'azote liquide, relié au conteneur frigorifique et le dioxyde de carbone vient d'au moins une bouteille à gaz (7) reliée au conteneur frigorifique, ce gaz inerte étant fourni à l'intérieur du conteneur frigorifique lorsqu'on dépasse la valeur limite prédéterminée de la teneur en oxygène, procédé caractérisé en ce que pendant la durée de l'introduction du gaz inerte, on genère un courant constant froid d'azote à l'état gazeux, à l'aide d'un évaporateur électrique (10), pour l'azote liquéfié, cet évaporateur étant relié au générateur électrique du groupe électrogène à moteur Diesel, et cet azote est introduit dans le conteneur frigorifique pendant que le dioxyde de carbone est extrait de la bouteille à gaz, pour être réchauffé, être détendu à une pression constante et être envoyé par un ou plusieurs points d'étranglements susceptibles d'être commandés séparément, branchés en parallèle, dans le conteneur frigorifique.

2. Procédé selon la revendication 1, caractérisé en ce que le dioxyde de carbone est introduit dans le conteneur frigorifique par l'intermédiaire de plusieurs diaphragmes de mesure (22).

3. Procédé selon la revendication 1 ou 2, caractérisé en ce que la veine d'azote gazeux froid est introduite dans le courant de circulation (13) de la machine frigorifique.

4. Procédé selon l'une des revendications 1 à 3, caractérisé en ce que la veine d'azote gazeux froid est fournie par un réservoir sans surpression.

5. Procédé selon l'une des revendications 1 à 4, caractérisé en ce que les composants de l'atmosphère de gaz inerte sont extraits de réservoirs et de bouteilles à gaz placés dans le conteneur frigorifique.

Fig. 1

# Fig. 2